## Europäisches Patentamt
## European Patent Office
## Office européen des brevets

(19)

(11) Veröffentlichungsnummer: **0 346 358**
**B1**

(12) **EUROPÄISCHE PATENTSCHRIFT**

(45) Veröffentlichungstag der Patentschrift: **26.09.90**

(51) Int. Cl.⁵: **B 62 D 3/12,** F 16 H 19/00

(21) Anmeldenummer: **88901577.2**

(22) Anmeldetag: **02.02.88**

(86) Internationale Anmeldenummer:
**PCT/EP88/00072**

(87) Internationale Veröffentlichungsnummer:
**WO 88/06113 25.08.88 Gazette 88/19**

(54) **ZAHNSTANGENLENKGETRIEBE, INSBESONDERE FÜR KRAFTFAHRZEUGE.**

(30) Priorität: **14.02.87 DE 3704703**

(43) Veröffentlichungstag der Anmeldung:
**20.12.89 Patentblatt 89/51**

(45) Bekanntmachung des Hinweises auf die
Patenterteilung:
**26.09.90 Patentblatt 90/39**

(84) Benannte Vertragsstaaten:
**DE FR GB IT**

(56) Entgegenhaltungen:
**DE-A-2 017 603**
**FR-A-1 384 997**
**FR-A-2 264 700**
**GB-A-2 037 931**
**US-A-4 669 328**

(73) Patentinhaber: **ZAHNRADFABRIK**
**FRIEDRICHSHAFEN AKTIENGESELLSCHAFT**
**Löwentaler Strasse 100 Postfach 2520**
**D-7990 Friedrichshafen 1 (DE)**

(72) Erfinder: **HÄGELE, Gerhard**
**Uhlandstrasse 1**
**D-7081 Hohenstadt (DE)**
Erfinder: **BETZ, Ansgar**
**Gmünderstrasse 25**
**D-7070 Schwäbisch Gmünd (DE)**
Erfinder: **WINTER, Herbert**
**Hermann-Hesse-Strasse 12**
**D-7070 Schwäbisch Gmünd (DE)**

(74) Vertreter: **Raue, Reimund**
**Zahnradfabrik Friedrichshafen AG Löwentaler**
**Strasse 100 Postfach 2520**
**D-7990 Friedrichshafen 1 (DE)**

Courier Press, Leamington Spa, England.

EP 0 346 358 B1

**Beschreibung**

Die Erfindung betrifft ein Zahnstangenlenkgetriebe, insbesondere für Kraftfahrzeuge nach dem Oberbegriff von Anspruch 1.

Zahnstangenlenkungen eignen sich besonders für den Einbau in Pkw und Kleinbusse. Solche z.B. aus der GB 20 37 931 A bekannte Lenkungen besitzen eine Zahnstange, die von einem federbelasteten Druckstück in ein Antriebsritzel gedrückt wird. Dadurch bleibt die Zahnstange auch auf schlechter Fahrbahn mit dem Antriebsritzel in Eingriff, und es entstehen keine Klappergeräusche. Das Druckstück hat die weitere Aufgabe, die Eigenreibung der Lenkung zu erhöhen, wodurch sich Axialschwingungen der Zahnstange und damit auch Drehschwingungen am Lenkhandrad unterdrücken lassen. Das am unteren Ende der Lenkspindel angeordnete Antriebsritzel stützt sich beidseitig in Wälzlagern ab.

In einer Zahnstangenlenkung mit extrem indirekter Übersetzung hat das Antriebsritzel einen verhältnismäßig kleinen Durchmesser. Das Lenkgetriebe hält daher bei hohen Lenkbelastungen den gleichzeitig auftretenden Torsions- und Beigekräften nicht stand. Bei unfallähnlichen Belastungen, z.B. beim Überfahren einer Bordsteinkante mit hoher Geschwindigkeit, kann es zu einem Bruch des Antriebsritzels kommen.

Der Erfindung liegt daher die Aufgabe zugrunde, die Belastbarkeit eines Zahnstangenlenkgetriebes dadurch zu verbessern, daß man die auf das Antriebsritzel einwirkenden schädlichen Biegekräfte möglichst niedrig hält.

Diese Aufgabe ist durch das Merkmal des Anspruchs 1 gelöst. Vorteilhafte Ausgestaltungen enthalten die Ansprüche 2 bis 4.

Nach der Erfindung ist das das Antriebsritzel umschließende Lenkgehäuse so ausgebildet, daß die bei einer hohen Lenkbelastung entstehende Durchbiegung des Antriebsritzels begrenzt wird, indem sich dieses mit seiner der Zahnstange abgewandten Umfangsfläche nach Überwinden eines Spalts im Lenkgehäuse abstützt. Dadurch lassen sich auch höhere auf das Antriebsritzel einwirkende Biegekräfte im Lenkgehäuse abstützen. Die Bruchfestigkeit des Antriebsritzels erhöht sich somit bei gleichen Abmessungen. Es ist vorteilhaft, im Lenkgehäuse eine Stützschale einzubauen, die das Antriebsritzel unter einem Winkel von ca. 180 Grad umgreift. In dieser Stützschale läßt sich das Ritzel bei normaler Fahrbeanspruchung frei bewegen. Der Lenkbetrieb bleibt ungestört. Bei hoher Lenkbelastung läßt die Stützschale jedoch nur eine begrenzte Durchbiegung des Antriebsritzels zu. Ein Bruch des Ritzels wird daher vermieden.

Die Stützschale kann im Lenkgehäuse verschraubt, vernietet oder verklebt sein. Es ist auch möglich, die Stützschale als Vorsprung unmittelbar in das Gehäuse einzugießen.

Die Erfindung ist anhand der Zeichnung an einem Ausführungsbeispiel näher erläutert. Es zeigt

Fig. 1 einen Teillängsschnitt durch das Lenkgetriebe,

Fig. 2 einen Querschnitt nach der Linie II—II in Fig. 1.

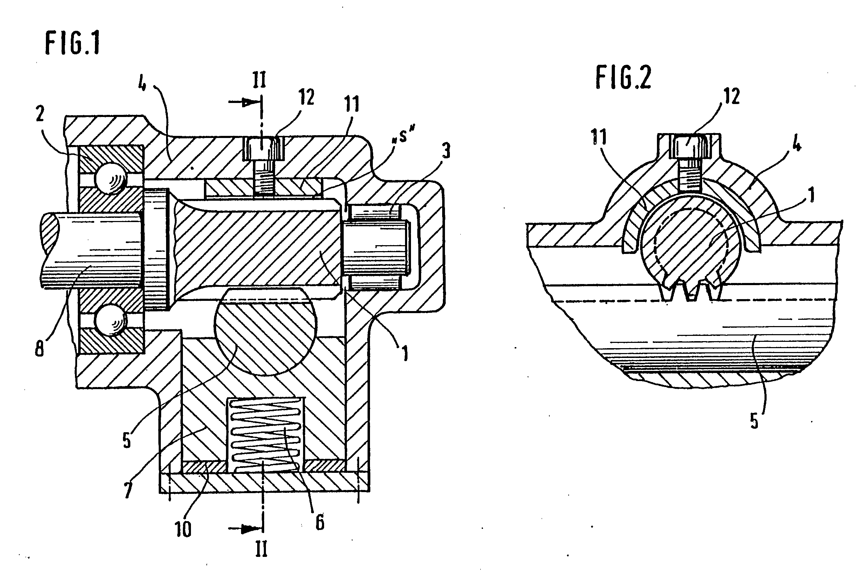

In Fig. 1 stützt sich ein Antriebsritzel 1 über Wälzlager 2 und 3 in einem Lenkgehäuse 4 ab. Eine Zahnstange 5 greift in das Antriebsritzel 1 ein. Ein durch eine Feder 6 belastetes Druckstück 7 drückt die Zahnstange 5 in eine Verzahnung des Antriebsritzels 1. Eine Lenkspindel 8 verbindet ein nicht gezeichnetes Lenkhandrad mit dem Antriebsritzel 1. Der Abstand des Druckstücks 7 zur Zahnstange 5 ist z.B. durch eine Ausgleichsscheibe 10 einstellbar. Es ist ebenso möglich, diesen Abstand mit Hilfe eines Gewindebolzens festzulegen.

Nach der Erfindung ist in das Lenkgehäuse 4 oberhalb des Antriebsritzels 1 eine Stützschale 11 eingebaut. Diese Stützschale 11 ist, wie in der Zeichnung dargestellt, mit dem Lenkgehäuse 4 durch Schrauben 12 verbunden. Die Stützschale 11 kann auch mit dem Lenkgehäuse 4 vernietet oder verklebt sein. Aus Fig. 2 ist ersichtlich, daß die Stützschale 11 das Antriebsritzel 1 unter einem Winkel von etwa 180 Grad umgreift. Es ist auch denkbar, die Stützschale 11 als Vorsprung in das Lenkgehäuse 4 einzugießen.

Überträgt die Zahnstange 5 einen von den gelenkten Rädern ausgehenden starken Stoß auf das Antriebsritzel 1, so legt sich dieses nach Überwinden eines Spalts "s" an der Stützschale 11 an. Das Antriebsritzel 1 dreht bei normaler Belastung vollkommen frei, so daß keine Reibungsverluste entstehen.

Bezugszeichen
1 Antriebsritzel
2 Wälzlager
3 Wälzlager
4 Lenkgehäuse
5 Zahnstange
6 Feder
7 Druckstück
8 Lenkspindel
9 Lenkspindel
10 Ausgleichsscheibe
11 Stützschale
12 Schrauben
"s" Spalt

**Patentansprüche**

1. Zahnstangenlenkgetriebe, insbesondere für Kraftfahrzeuge mit folgenden Merkmalen:

Ein mit einer Lenkspindel (8) verbundenes Antriebsritzel (1) greift in einem Lenkgehäuse (4) in eine quer zur Lenkspindel angeordnete Zahnstange (5) ein;

die Zahnstange (5) stützt sich auf der dem Antriebsritzel (1) gegenüberliegenden Seite an einem federnd im Gehäuse gelagerten Druckstück (7) ab, dadurch gekennzeichnet,

daß das Lenkgehäuse (4) so ausgebildet ist, daß die bei einer hohen Lenkbelastung entstehende Durchbiegung des Antriebsritzels (1) begrenzt wird, indem sich dieses mit seiner der Zahnstange (5) abgewandten Umfangsfläche nach Überwinden eines Spalts ("s") im Lenkgehäuse (4) abstützt.

2. Zahnstangenlenkgetriebe nach Anspruch 1, dadurch gekennzeichnet, daß in das Lenkgehäuse (4) eine Stützschale (11) eingebaut ist, die das Antriebsritzel (1) unter Bildung eines Spaltes ("s") mit einem Winkel von etwa 180 Grad umgreift.

3. Zahnstangenlenkgetriebe nach Anspruch 2, dadurch gekennzeichnet, daß die Stützschale (11) mit dem Lenkgehäuse (4) verschraubt, vernietet oder verklebt ist.

4. Zahnstangenlenkgetriebe nach Anspruch 1, dadurch gekennzeichnet, daß die Stützschale (11) als Vorsprung in das Lenkgetriebe (4) eingegossen ist.

**Revendications**

1. Mécanisme de direction à crémaillère, notamment pour véhicules à moteur, dans lequel:

un pignon (1) fixé à un arbre de direction (8) est engrené, dans un boîtier de direction (4), sur une crémaillère (5) disposée transversalement par rapport audit arbre,

la crémaillère (5) est appuyée, du côté opposé au pignon (1), sur un élément d'appui (7) monté élastiquement dans le boîtier, caractérisé en ce que:

le boîtier (4) est agencé de telle façon que la flexion du pignon (1) résultant d'une forte charge sur la direction est limitée par le fait que la surface périphérique du pignon, du côté opposé à la crémaillère (5), est appuyée dans le boîtier (4) après avoir franchi un intervalle de jeu ("s").

2. Mécanisme de direction à crémaillère selon la revendication 1, caractérisé en ce que le boîtier (4) contient une coquille d'appui (11) qui entoure le pignon (1) sur un angle d'environ 180° en laissant un intervalle de jeu ("s").

3. Mécanisme selon la revendication 2, caractérisé en ce que la coquille d'appui (11) est vissée, rivetée ou collée au boîtier (4).

4. Mécanisme selon la revendication 1, caractérisé en ce que la coquille d'appui (11) est une portée coulée dans le boîtier (4).

**Claims**

1. Rack-and-pinion steering gear, in particular for motor vehicles, with the following features:

a pinion (1), which is connected to a steering column (8), engages in a steering box (4) with a rack (5), which is arranged tranversely to the steering column;

the rack (5) is supported on the side which is opposite the pinion (1) on a thrust member (7), which is spring-mounted in the box, characterised in that

the steering box (4) is formed such that the deflection to which the pinion (1) is subject under high steering loads is limited by the fact that the latter is supported in the steering box (4) via its circumferential surface which is distant from the rack (5) after overpassing a gap ("s").

2. Rack-and-pinion steering gear according to claim 1, characterised in that a support shell (11) is fitted in the box (4) and encompasses the pinion (1) at an angle of approximately 180 degrees, while forming a gap ("s").

3. Rack-and-pinion steering gear according to claim 2, characterised in that the support shell (11) is screwed, riveted or glued to the steering box (4).

4. Rack-and-pinion steering gear according to claim 1, characterised in that the support shell (11) is integrally cast as a projection into the steering box (4).

EP 0 346 358 B1

FIG.2

FIG.1

1